# EUROPÄISCHE PATENTSCHRIFT

(11) **EP 3 019 346 B1**
(45) Veröffentlichungstag und Bekanntmachung des Hinweises auf die Patenterteilung: **12.12.2018**
(21) Anmeldenummer: 14716827.2
(22) Anmeldetag: 11.04.2014
(51) Int. Cl.: B60C 11/03

(54) **LAUFSTREIFENPROFIL EINES FAHRZEUGLUFTREIFENS**
TREAD PROFILE OF A PNEUMATIC VEHICLE TIRE
PROFIL DE BANDE DE ROULEMENT D'UN PNEU DE VÉHICULE

(30) Priorität: 08.07.2013 DE 102013107161
(43) Veröffentlichungstag der Anmeldung: 18.05.2016
(73) Patentinhaber: Continental Reifen Deutschland GmbH, 30165 Hannover (DE)
(72) Erfinder: RITTWEGER, Stefan, 30163 Hannover (DE)
(74) Vertreter: Finger, Karsten
(86) Internationale Anmeldenummer: PCT/EP2014/057337
(87) Internationale Veröffentlichungsnummer: WO 2015/003827

(56) Entgegenhaltungen:
- WO-A1-00/00357
- WO-A1-2013/083610
- WO-A1-2014/040958
- DE-U1- 29 921 572
- JP-A- 2001 063 323
- US-A1- 2011 168 311

## Beschreibung

Die Erfindung betrifft ein Laufstreifenprofil eines Fahrzeugluftreifens mit in axialer Richtung A des Fahrzeugluftreifens nebeneinander angeordneten Umfangsrillen und mit jeweils einem axial zwischen zwei benachbarten Umfangsrillen der in radialer Richtung gemessenen Profiltiefe P_{T} angeordneten, über den Umfang des Reifens erstreckten Profilband der Breite B, welches in radialer Richtung nach außen hin durch eine radial äußere, die Bodenkontaktfläche bildende Oberfläche begrenzt ist, wobei das Profilband in axialer Richtung A zu beiden Seiten hin jeweils durch eine Flanke begrenzt wird, die jeweils die zum Profilband weisende Rillenwand der begrenzenden Umfangsrille bildet.

Bei der Reifenkonzeption ist es wünschenswert, Profilblöcke von Profilblockreihen und Profilrippen zur Erzielung einer hohen Steifigkeit und möglichst einer großen Kontaktoberfläche zur Fahrbahnoberfläche möglichst breit und darüber hinaus Profilblockelemente in Umfangsrichtung möglichst lange erstreckt auszubilden. Hierdurch können Trockenfahreigenschaften bzw. Trockenbremsen, Trockentraktion und Trockenhandling begünstigt werden. Derartige Laufstreifenprofile sind bekannt.

Eine derartige Ausbildung von möglichst breiten Profilbändern (Profilrippen oder Profilblockreihen) und von Profilblockreihen mit möglichst langen Profilblockelementen erschwert jedoch den Ablauf von Wasser aus dem Erstreckungsbereich des Profilbandes und begünstigt somit Aquaplaning.

Es ist bekannt, zur Verbesserung der Aquaplaning-Eigenschaften Profilrippen schmal und Profilblockelemente von Profilblockreihen schmal und kurz auszubilden, wodurch eine höhere Dichte von Querrillen und Umfangsrillen im Profil umgesetzt werden kann. Derartige Laufstreifenprofile sind bekannt. Durch diese Ausbildung kann der Ablauf des Wassers verbessert und somit die Aquaplaning-Eigenschaften begünstigt werden. Die schmale Bauweise der Profilbänder (Rippen bzw. Profilblockreihen) bzw. die kurze Bauweise der Profilblockelemente reduziert jedoch die Quersteifigkeit bzw. die Umfangssteifigkeit der Profilbänder, wodurch die Trockenperformance-Eigenschaften wie Trockenhandling oder Trockenbremsen und Trockentraktion negativ beeinflusst werden können.

Gelegentlich ist vorgeschlagen worden, in der radial äußeren Oberfläche von Profilblockelementen und somit zwischen den, die Profilblockelemente begrenzenden Umfangs- bzw. Querrillen der jeweiligen Profilblockelemente zusätzliche feine Oberflächenrillen mit deutlich geringerer Tiefe als die des Profilblockelements begrenzenden Umfangs- bzw. Querrillen auszubilden. Derartige Oberflächenrillen können beispielsweise in begrenztem Umfang zusätzliche Griffkanten bilden zur Erzielung eines verbesserten Griffs auf nasser Oberfläche. Darüber hinaus können im Wesentlichen in Umfangsrichtung U ausgerichtete Oberflächenrillen begrenzt Wasser aufnehmen und längs der Erstreckungsrichtung begrenzt ableiten. Der Effekt der Aufnahme und Ableitung wird jedoch durch die geringe Aufnahmekapazität eingeschränkt.

Beispielsweise aus der EP 0 625 436 B1 ist es bekannt, in radial erhabenen Profilelemente, welche durch Rillen begrenzt werden und die in radialer Richtung nach außen hin durch eine die Straßenkontaktoberfläche bildendende Oberfläche begrenzt werden, direkt in der radial äußeren Oberfläche eine Art Bohrung auszubilden, welche in unterhalb der radial äußeren Oberfläche ausgebildete Kanäle münden, die ihrerseits in die das Profilelement begrenzenden Rillen münden. Durch diese Ausbildung kann in sehr diffuser Weise das beim Abrollen des Reifens gerade zwischen Bohrung und Straßenoberfläche befindliche Wasser aufgenommen und abgeleitet werden. Der Effekt ist jedoch aufgrund der zwischen der das Bohrloch umgebenden radial äußeren Oberfläche und der Straßenkontaktoberfläche entstehenden diffusen Verdrängung des Wasser einerseits und des zusätzlichen aufgrund der Komprimierung des Gummimaterials unmittelbar im Bereich der Straßenoberfläche bedingten zumindest teilweisen Verschlusses der Öffnung nur begrenzt möglich.

Die Ausbildung ermöglicht noch kein schnelles gerichtetes Verdrängen und Ableiten des Wassers. Die Wirkung einer derartigen Ausbildung, gerade bei besonders großen Kontaktoberflächen, wie sie zur Erzielung guter Trockeneigenschaften gewünscht sind, ist nur sehr eingeschränkt wirksam.

Aus der gattungsbildenden den WO 2013/083610 A1 ist ein Laufstreifenprofil eines Fahrzeugluftreifens bekannt, bei dem in einem durch eine Umfangsrille begrenzten Schulterprofilband ein in Umfangsrichtung orientierter Feineinschnitt ausgebildet ist, welcher in radialer Richtung nach innen hin durch einen rohrförmigen sich in Umfangsrichtung erstreckenden Durchgangskanal begrenzt wird, der seinerseits durch einen seitlichen Querkanal mit der angrenzenden Umfangsrille verbunden ist.

Der Erfindung liegt die Aufgabe zugrunde, bei derartigen Laufstreifenprofilen Fahrzeugluftreifen den gute Trockenhandling-Eigenschaften mit verbessertem Aquaplaning-Eigenschaften zu ermöglichen.

Die Aufgabe wird erfindungsgemäß durch die Ausbildung eines Laufstreifenprofils eines Fahrzeugluftreifens mit in axialer Richtung A des Fahrzeugluftreifens nebeneinander angeordneten Umfangsrillen und mit jeweils einem axial zwischen zwei benachbarten Umfangsrillen der in radialer Richtung gemessenen Profiltiefe P_{T} angeordneten, über den Umfang des Reifens erstreckten Profilband der Breite B, welches in radialer Richtung nach außen hin durch eine radial äußere, die Bodenkontaktfläche bildende Oberfläche begrenzt ist, wobei das Profilband in axialer Richtung A zu beiden Seiten hin jeweils durch eine Flanke begrenzt wird, die jeweils die zum Profilband weisende Rillenwand der begrenzenden Umfangsrille bildet, gemäß den Merkmalen von Anspruch 1 gelöst, bei dem in der radial äußeren Oberfläche des Profilbandes mit Abstand a > 0mm zu beiden das Profilband begrenzenden Umfangsrillen im Profilband eine in Umfangsrichtung U des Reifens orientierte Umfangsnut der in der radial äußeren Oberfläche gemessenen maximalen Breite b mit b < (B/2) ausgebildet ist, welche in radialer Richtung nach innen durch einen Nutgrund begrenzt und mit einer in radialer Richtung R gemessenen Tiefe t mit 0,5mm ≤t≤(1/3)P_{T} ausgebildet ist, und bei dem über den Umfang des Reifens verteilt im Profilband rohrförmige Durchgangskanäle ausgebildet sind, die sich jeweils ausgehend vom Nutgrund bis in die eine Rillenwand der angrenzenden Umfangsrille bildende Flanke radial innerhalb der radial äußeren Oberfläche erstrecken und die Nut und die Umfangsrille miteinander verbinden.

Durch diese Ausbildung wird ermöglicht, dass das Wasser im Kontaktbereich zwischen der radial äußeren Oberfläche des Profilbandes und der Straßenoberfläche längs der gesamten Erstreckung der Umfangsnut aus dem Kontaktbereich heraus durch die Umfangsnut direkt aufgenommen und gerichtet in die im Nutgrund der Umfangsnut ausgebildeten Durchgangskanäle hinein und durch die Durchgangskanäle hindurch bis in die tiefen Umfangsrillen abgeleitet werden kann. Das Wasser kann somit trotz diffuser Verdrängung zwischen der Straßenkontaktoberfläche und der radial äußerer Oberfläche wirksam aufgenommen und abgeleitet werden. Gerade in dem für Trockenhandling-Eigenschaften und Trockenbrems-Eigenschaften besonders kritischen Zustand des Neureifens mit großer Profiltiefe kann somit eine große Kontaktoberfläche bei hoher Umfangs- und Quersteifigkeit des Profilbandes umgesetzt werden und dennoch verbesserte Aquaplaning-Eigenschaft erzielt werden. Dabei ist durch die Ausbildung des Durchgangskanals aus dem Nutgrund heraus ein Verschließen des Durchgangskanals erschwert, wodurch der Wasserablauf zuverlässig ermöglicht wird.

Besonders vorteilhaft ist die Ausbildung eines Fahrzeugreifens gemäß den Merkmalen von Anspruch 2, wobei die Tiefe t mit t ≤ 3mm ausgebildet ist. Hierdurch kann in einfacher Weise eine gute Querdrainage sicher gestellt werden ohne das Profilband merklich aufzuweichen.

Besonders vorteilhaft ist die Ausbildung eines Fahrzeugreifens gemäß den Merkmalen von Anspruch 3, wobei die Breite b der Nut mit b ≤ (B/5) ausgebildet ist. Hierdurch kann in einfacher Weise trotz Wasserableitung ein ausreichen großer, wirksamer Kontakt zur Straßenoberfläche sicher umgesetzt werden.

Besonders vorteilhaft ist die Ausbildung eines Fahrzeugreifens gemäß den Merkmalen von Anspruch 4, wobei die Breite b der Nut mit 2mm≤b≤5mm ausgebildet ist. Hierdurch kann in einfacher Weise ein optimaler Kompromiss aus guter Entwässerungsfunktion und guten Trockeneigenschaften des Profilbandes umgesetzt werden.

Besonders vorteilhaft ist die Ausbildung eines Fahrzeugreifens gemäß den Merkmalen von Anspruch 5, wobei die Breite B des Profilbandes mit 20mm≤B≤60mm - insbesondere mit 20mm≤B≤40mm - ausgebildet ist. Hierdurch können die Erfordernisse für PKW-Reifen und für Nutzfahrzeugreifen und bei Ausbildung mit 20mm≤B≤40mm für PKW-Reifen optimal umgesetzt werden.

Besonders vorteilhaft ist die Ausbildung eines Fahrzeugreifens gemäß den Merkmalen von Anspruch 6, wobei der Abstand a mit a ≥10mm ausgebildet ist. Hierdurch kann in einfacher Weise die beispielsweise in Handlingsituationen wichtige hohe Stabilität des zwischen Nut und Umfangsrille ausgebildeten Abschnittes des Profilbandes auf hohem Niveau umgesetzt werden.

Besonders vorteilhaft ist die Ausbildung eines Fahrzeugreifens gemäß den Merkmalen von Anspruch 7, wobei der rohrförmige Durchgangskanal sich in - insbesondere in einem ersten Erstreckungsabschnitt - ausgehend von der Flanke in axialer Richtung A unter Einschluss eines Neigungswinkels α zur axialen Richtung A mit 0°≤α≤45° durch das Profilband hindurch bis zur axialen Position des Nutgrundes erstreckt. Hierdurch kann eine gute Drainage umgesetzt und dabei die Ausbildung von besonders spitzen zwischen Durchgangskanal und Umfangsrille eingeschlossenen Profilelementabschnitten einfach vermieden werden.

Besonders vorteilhaft ist die Ausbildung eines Fahrzeugreifens gemäß den Merkmalen von Anspruch 8, wobei der rohrförmige Durchgangskanal in einem zweiten Erstreckungsabschnitt ausgehend vom ersten Erstreckungsabschnitt in der axialen Posititon der Nut im Wesentlichen in radialer Richtung nach außen hin bis zum Nutgrund erstreckt ausgebildet ist. Die Ausbildung entspricht der kürzesten Verbindung zwischen Nut und Durchgangskanal, wodurch eine hohe Effektivität der Ableitung begünstigt wird.

Besonders vorteilhaft ist die Ausbildung eines Fahrzeugreifens gemäß den Merkmalen von Anspruch 9, wobei der rohrförmige Durchgangskanal mit seinem tiefsten Punkte in einer von der radial äußeren Oberfläche gemessenen Tiefe T₂ in der Flanke ausgebildet ist. Besonders vorteilhaft ist die Ausbildung eines Fahrzeugreifens gemäß den Merkmalen von Anspruch 10, wobei der rohrförmige Durchgangskanal mit seinem tiefsten Punkte in einer von der radial äußeren Oberfläche gemessenen Tiefe T₂ in der Flanke ausgebildet ist mit (0,6 P_{T})≤T₂≤P_{T}. Hierdurch kann ein besonders guter Kompromiss zwischen guter Stabilität des Profilbandes zur Übertragung der erforderlichen Kräfte bei guter Entwässerungsfunktion in einfacher wiese umgesetzt werden.

Besonders vorteilhaft ist die Ausbildung eines Fahrzeugreifens gemäß den Merkmalen von Anspruch 11, wobei der rohrförmige Durchgangskanal - insbesondere bei einem PKW-Reifen -mit seinem tiefsten Punkte in einer von der radial äußeren Oberfläche gemessenen Tiefe T₂ in der Flanke ausgebildet ist mit (P_{T} - 3mm)≤T₂≤P_{T}. Hierdurch kann insbesondere bei PKW-Reifen ein besonders guter Kompromiss zwischen guter Stabilität des Profilbandes zur Übertragung der erforderlichen Kräfte bei guter Entwässerungsfunktion in einfacher wiese umgesetzt werden.

Besonders vorteilhaft ist die Ausbildung eines Fahrzeugreifens gemäß den Merkmalen von Anspruch 12, wobei zwei in Umfangsrichtung U innerhalb eines als Profilrippe ausgebildeten Profilbandes oder innerhalb eines Profilblockes bei einem als Profilblockreihe ausgebildeten Profilbandes hintereinander angeordneten Durchgangskanäle im Nutgrund jeweils im Abstand L mit 20mm ≤L≤ 40mm hintereinander angeordnet sind. Dies ermöglicht eine einfache Umsetzung bei Verwendung üblicher Pitchlängen von Profilabschnitten.

Die Erfindung wird im Folgenden an Hand der in den Figuren 1 bis 13 dargestellten Ausführungsbeispiele näher erläutert. Hierin zeigen
- Fig.1: eine Draufsicht auf einen Umfangsabschnitt des Laufstreifenprofils eines Pkw-Reifens,
- Fig.2: eine vergrößerte Detaildarstellung des Details II von Fig.1 in Draufsicht auf das Laufstreifenprofil,
- Fig.3: das Laufstreifenprofil von Fig. 2 in Schnittdarstellung gemäß Schnitt III - III von Fig.2,
- Fig.4: das Laufstreifenprofil von Fig.1 in Schnittdarstellung gemäß Schnitt IV - IV von Fig.1,
- Fig.5: eine analog Darstellung zur Darstellung von Fig.2 mit alternativer Ausbildung der Profilrippe,
- Fig.6: das Laufstreifenprofil von Fig.5 in Schnittdarstellung VI - VI von Fig.5,
- Fig.7: Darstellung analog der Darstellung von Fig.3 zur Erläuterung einer alternativen Ausführungsform einer Umfangsrippe von Fig.1,
- Fig.8: Laufstreifenprofil von Fig.7 in Schnittdarstellung gemäß Schnitt VIII - VIII von Fig.7,
- Fig.9: eine Detailansicht analog zur Darstellung von Fig.3 mit Darstellung einer alternativen Ausführungsform einer Profilrippe von Fig.1,
- Fig.10: das Laufstreifenprofil von Fig.9 in Querschnittdarstellung gemäß Schnitt X - X von Fig.9,
- Fig.11: eine Detaildarstellung einer alternativen Ausführungsform einer Umfangsrippe in analoger Darstellung zu Fig.3,
- Fig.12: das Laufstreifenprofil von Fig.11 in Schnittdarstellung gemäß Schnitt XII - XII von Fig.11 und
- Fig.13: eine Schnittdarstellung analog zur Schnittdarstellung IV - IV von Figur 1 mit alternativer Ausführung der Durchgangskanäle.

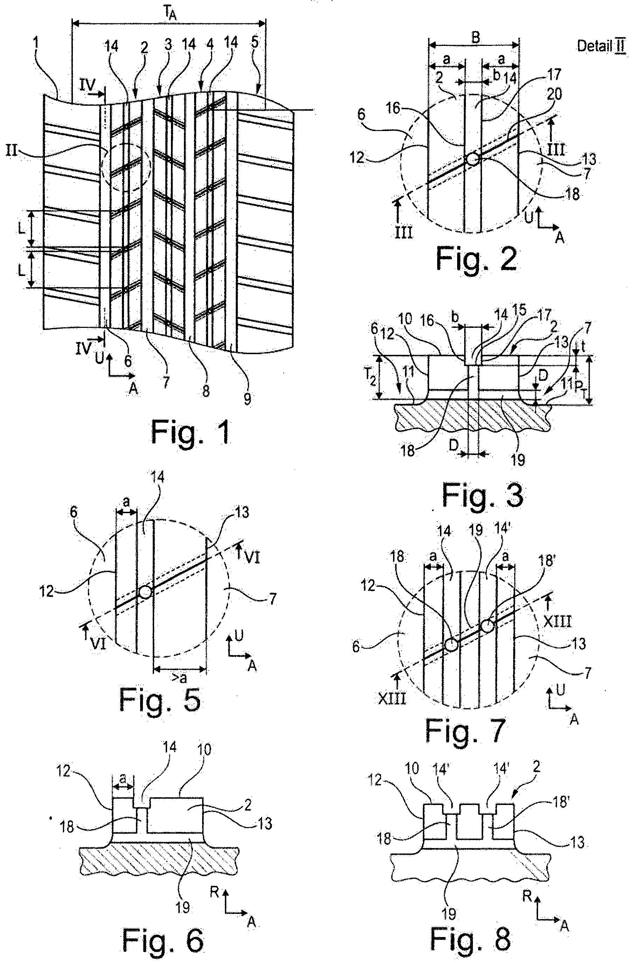

Die Figuren 1 bis 4 zeigen ein Laufstreifenprofil eines Fahrzeugluftreifens für Pkw-Reifen bekannter Art mit mehreren in axialer Richtung A nebeneinander angeordneten und über den gesamten Umfang des Fahrzeugluftreifens erstreckten und in Umfangsrichtung U des Fahrzeugluftreifens ausgerichteten Profilbändern 1, 2, 3, 4 und 5.

Das Profilband 1 ist auf der - in Fig.1 auf der linken Seite dargestellten - linken Reifenschulter und das Profilband 5 auf der - in Fig.1 auf der rechten Seite dargestellten - rechten Reifenschulter ausgebildet. In Fig.1 ist die Bodenaufstandsbreite T_{A} des Fahrzeugluftreifens im Normzustand des auf die Felge montierten Reifens dargestellt, welche sich in axialer Richtung A des Fahrzeugluftreifens, ausgehend von dem axialen Erstreckungsbereich des Profilbandes 1 bis in den axialen Erstreckungsbereich des Profilbandes 5 erstreckt.

Bei dem in den Figuren 1 bis 4 dargestellten Laufstreifenprofil ist das Profilband 1 als Profilblockreihe bekannter Art ausgebildet, welche sich über den gesamten Umfang des Fahrzeugluftreifens erstreckt und in Umfangsrichtung aus hintereinander angeordneten, radial erhabenen und jeweils durch Querrillen voneinander getrennten Profilblockelementen besteht. Ebenso ist das Profilband 5 als Profilblockreihe bekannter Art ausgebildet, welche sich über den gesamten Umfang des Fahrzeugluftreifens erstreckt und in Umfangsrichtung U des Fahrzeugluftreifens aus hintereinander angeordneten und jeweils durch Querrillen voneinander getrennten Profilblockelementen besteht.

Die zwischen den beiden Schulterprofilblockreihen 1 und 5 ausgebildeten Profilbänder 2, 3 und 4 sind im dargestellten Ausführungsbeispiel als Umfangsrippen 2, 3 und 4 bekannter Art ausgebildet. Die Umfangsrippen 2, 3 und 4 erstrecken sich dabei in Umfangsrichtung U des Fahrzeugluftreifens ausgerichtet jeweils über den gesamten Umfang des Fahrzeugluftreifens.

Die Umfangsrippen 2, 3 und 4 sind in radialer Richtung R des Fahrzeugluftreifens nach außen hin jeweils in bekannter Weise durch eine radial äußere Oberfläche 10, welche die Straßenkontaktoberfläche bildet, begrenzt. Ebenso sind die Profilblockelemente der Profilblockreihen 1 und 5 in radialer Richtung R nach außen hin durch eine radial äußere Oberfläche begrenzt, welche innerhalb des axialen Erstreckungsbereichs der Bodenaufstandsbreite T_{A} die Bodenkontaktoberfläche der Profilblockelemente bildet.

Die Profilblockreihe 1 und die Umfangsrippe 2 sind in bekannter Weise in axialer Richtung A durch eine über den gesamten Umfang des Fahrzeugluftreifens erstreckte und in Umfangsrichtung U ausgerichtete Umfangsrille 6 voneinander beabstandet. Die Umfangsrippe 2 und die Umfangsrippe 3 sind in axialer Richtung A durch eine über den gesamten Umfang des Fahrzeugluftreifens erstreckte und in Umfangsrichtung U ausgerichtete Umfangsrille 7 voneinander beabstandet. Die Umfangsrippe 3 und die Umfangsrippe 4 sind in axialer Richtung A durch eine über den gesamten Umfang des Fahrzeugluftreifens erstreckte und in Umfangsrichtung U ausgerichtete Umfangsrille 8 voneinander beabstandet. Die Umfangsrippe 4 und die Profilblockreihe 5 sind in axialer Richtung A durch eine über den gesamten Umfang des Fahrzeugluftreifens erstreckte und in Umfangsrichtung U ausgerichtete Umfangsrille 9 voneinander beabstandet. Die Umfangsrillen 6, 7, 8 und 9 sind in radialer Richtung R nach innen hin jeweils durch einen über den gesamten Umfang des Fahrzeugluftreifens erstreckten Rillengrund 11 begrenzt. Beiderseits des Rillengrundes 11 ist die jeweilige Umfangsrille 6, 7, 8 bzw. 9 jeweils mit einer in Umfangsrichtung U über den Umfang des Fahrzeugluftreifens erstreckten und in radialer Richtung R ausgehend vom Rillengrund 11 bis zur radial äußeren Oberfläche 13 erstreckten Rillenwand ausgebildet, die jeweils die zur jeweiligen Umfangsrille 6, 7, 8 bzw. 9 hin gerichtete Flanke der angrenzenden Umfangsrippe bzw. Profilblockreihe bildet.

Die Figuren 2 und 3 ist beispielhaft die Umfangsrippe 2 und die an die Umfangsrippe 2 angrenzenden Umfangsrillen 6 und 7 dargestellt. Die Umfangsrippe 2 ist zur Umfangsrille 6 hin durch eine Flanke 12 begrenzt, welche sich ausgehend vom Rillengrund 11 der Umfangsrille 6 in radialer Richtung R nach außen bis zu der die Umfangsrippe 2 in radialer Richtung R nach außen hin begrenzenden radial äußeren Oberfläche 10 erstreckt und dabei die zur Umfangsrippe 2 hin gerichtete Rillenwand der Umfangsrille 6 bildet. Ebenso ist die Umfangsrippe 2 auf ihrer zur Umfangsrille 7 hin weisenden Seite von einer Flanke 13 begrenzt, welche sich ausgehend vom Rillengrund 11 der Umfangsrille 7 in radialer Richtung R nach außen bis zu der die Umfangsrippe 2 in radialer Richtung R nach außen hin begrenzenden Oberfläche 10 erstreckt und dabei die zur Umfangsrippe 2 hin gerichtete Rillenwand der Umfangsrille 7 bildet. Die Umfangsrillen 6, 7, 8 und 9 sind - wie am Beispiel der Umfangsrillen 6 und 7 in Fig.3 dargestellt ist - jeweils mit einer in radialer Richtung R ausgehend vom Rillengrund 11 bis zur radial äußeren Oberfläche 10 gemessenen maximalen Profiltiefe P_{T} ausgebildet.

Die Umfangsrippe 2 ist in der radial äußeren Oberfläche 10 längs ihrer Erstreckung in Umfangsrichtung U mit einer in axialer Richtung A gemessenen Breite B mit 20mm≤B≤40mm ausgebildet. Im dargestellten Ausführungsbeispiel ist B = 25 mm gewählt. In der Umfangsrippe 2 ist - wie in Figuren 1, 2 und 3 dargestellt ist - mit axialem Abstand a sowohl von der Flanke 12 als auch von der Flanke 13 und somit von der Umfangsrille 6 und von der Umfangsrille 7 - gemessen in der radial äußeren Oberfläche 10 - eine über den Umfang des Fahrzeugluftreifens hinweg erstreckte und geradlinig in Umfangsrichtung U ausgerichtete Umfangsnut 14 ausgebildet. Die Umfangsnut 14 ist in radialer Richtung R nach innen hin von einem über den Umfang des Fahrzeugluftreifens erstreckten Nutgrund 15 und beiderseits des Nutgrundes 15 in axialer Richtung A jeweils durch eine Nutwand 16 bzw. 17 begrenzt ist. Der Nutgrund 15 ist in den senkrecht zur Haupterstreckungsrichtung der Umfangsnut 14 - und somit senkrecht zur Umfangsrichtung U - gebildeten Schnittebenen geradlinig ausgebildet. Die Nutwände 16 und 17 erstrecken sich in diesen Schnittebenen ausgehend vom Nutgrund 15 im Wesentlichen in radialer Richtung R bis zur radial äußeren Oberfläche 10 der Umfangsrippe 2. Die Umfangsnut 14 ist mit einer in radialer Richtung R ausgehend von der radial äußeren Oberfläche 10 bis zum Nutgrund 15 gemessenen Tiefe t ausgebildet und mit einer in axialer Richtung A des Fahrzeugluftreifens gemessenen Breite b, welche in der radial äußeren Oberfläche 10 gemessen wird. Die Tiefe t der Nut ist mit 0,5mm≤t≤(1/3)P_{T} ausgebildet, wobei P_{T} dabei die Profiltiefe der die Umfangsrippe 2 begrenzenden Umfangsrillen 6,7 angibt. Die Tiefe t ist mit t ≤ 3 mm ausgebildet.

Bei Pkw-Reifen ist die Profiltiefe P_{T} mit 7 mm ≤ P_{T} ≤ 9 mm ausgebildet.

Beispielsweise ist die Profiltiefe P_{T} = 9 mm und die Tiefe t = 2 mm ausgebildet.

Die Breite b ist mit b ≤ (1/5)B ausgebildet. Die Breite b ist dabei mit 2mm≤b≤5mm ausgebildet. Im dargestellten Ausführungsbeispiel ist b = 3 mm ausgebildet.

Der Abstand a ist mit a ≥ 10 mm ausgebildet. Im dargestellten Ausführungsbeispiel ist a=11mm ausgebildet.

Über den Umfang des Fahrzeugluftreifens hinweg verteilt sind im Nutgrund 15 jeweils in dem im Umfangsrichtung U gemessenen Abstand L hintereinander angeordnet ringförmige Kanäle 18 ausgebildet. Jeder Kanal 18 erstreckt sich jeweils ausgehend vom Nutgrund 15 in radialer Richtung R nach innen hin und mündet jeweils in einen in radialer Richtung R unterhalb der Position des Nutgrundes 15 angeordnet ausgebildeten und in axialer Richtung A durch die gesamte Umfangsrippe 2 hindurch erstreckten Kanal 19. Der Kanal 19 erstreckt sich - wie in den Figuren 1, 2 und 3 dargestellt ist - ausgehend von der die Umfangsrippe 2 zur Umfangsrille 6 hin begrenzenden Flanke 12 über die gesamte Breite B der Umfangsrippe 2 bis zu der die Umfangsrippe 2 zur Umfangsrille 7 hin begrenzenden Flanke 13 und verbindet die Umfangsrille 6 mit der Umfangsrille 7 unterhalb des Nutgrundes 14. Der Kanal 18 und der Kanal 19 sind jeweils längs ihrer gesamten Erstreckung mit kreisförmigem Querschnitt mit Durchmesser D ausgebildet, wobei der Durchmesser D mit 2mm ≤ D ≤ b ausgebildet ist. Im dargestellten Ausführungsbeispiel ist der Durchmesser D mit D = 2,5 mm ausgebildet.

Der Kanal 19 erstreckt sich im dargestellten Ausführungsbeispiel geradlinig erstreckt durch die Umfangsrippe 2 hindurch unter Einschluss eines Neigungswinkels α zur axialen Richtung A mit 0°≤ α ≤ 45°. Im dargestellten Ausführungsbeispiel ist α = 1.0° gewählt. Der Kanal 19 ist dabei so ausgebildet, dass er seinen tiefsten Punkt mit der Tiefe T₂ in der jeweiligen Rippenflanke 12 bzw. 13 aufweist, in welche der Kanal 19 mündet. Die Tiefe T₂ gibt den maximalen radialen Abstand zwischen der radial äußeren Oberfläche 10 der Umfangsrippe 2 und dem den Kanal 19 nach radial innen hin begrenzenden Kanalgrund an. Im dargestellten Ausführungsbeispiel ist der Kanal 19 ausgehend von der Flanke 12 längs seiner gesamten Erstreckung bis zur Flanke 13 mit gleichbleibender Tiefe T₂ ausgebildet.

Die Tiefe T₂ ist mit (0,6 P_{T}) ≤ T₂ ≤ P_{T} ausgebildet. Bei Pkw-Reifen gilt darüber hinaus (P_{T} - 3 mm) ≤ T₂.

Der Kanal 18 mündet zentrisch in den Kanal 19, so dass die Kanalachse des Kanals 18 die Kanalachse des Kanals 19 schneidet.

Zur einfacheren Herstellbarkeit ist der Kanal 19 längs seiner axialen Erstreckung ausgehend vom Kanal 18 in die eine Erstreckungsrichtung bis zur Flanke 12 und ausgehend vom Kanal 18 in die andere Erstreckungsrichtung bis zur Flanke 13 mit Hilfe eines parallel zum Kanal 19 ausgerichteten Feineinschnitt 20 mit der radial äußeren Oberfläche 19 verbunden, der sich in radialer Richtung R ausgehend von der radial äußeren Oberfläche 19 und dem Kanal19 erstreckt. Die Einschnittdicke s des Feineinschnitts 20 ist längs seiner Erstreckung mit s ≤ (0,5 b) ausgebildet. Im dargestellten Ausführungsbeispiel ist s mit s ≤ 1 mm ausgebildet.

In den Figuren 1 bis 3 ist ein Ausführungsbeispiel dargestellt, bei dem die Umfangsnut 14 in axialer Richtung A mittig in der Umfangsrippe 2 angeordnet ist, wobei der Abstand a zur Flanke 12 und der Abstand a zur Flanke 13 gleich groß gewählt ist.

Die Figuren 5 und 6 zeigen ein alternatives Ausführungsbeispiel, bei welchem die Umfangsnut 14 in axialer Richtung A des Fahrzeugluftreifens außermittig positioniert angeordnet ist. Im dargestellten Ausführungsbeispiel ist die Umfangsnut 14 näher an der Flanke 12 als an der Flanke 13 angeordnet. Der Abstand zur Flanke 12 ist a, der Abstand zur Flanke 13 ist größer als a ausgebildet.

Die Figuren 7 und 8 zeigen ein weiteres alternatives Ausführungsbeispiel, bei dem in der radial äußeren Oberfläche 10 der Umfangsrippe 2 in axialer Richtung A nebeneinander angeordnet und voneinander beabstandet zwei derartige Umfangsnuten 14 und 14' ausgebildet sind. Sowohl im Nutgrund 15 der Umfangsnut 14 als auch im Nutgrund 15' der Umfangsnut 14' sind jeweils in radialer Richtung R nach innen hin erstreckte Kanäle 18 bzw. 18' des Durchmessers D ausgebildet. Jeweils ein Kanal 18 und ein Kanal 18' erstrecken sich nach radial innen hin und münden in einen gemeinsamen Kanal 19. Die Umfangsnut 14 ist im Abstand a zur Flanke 12, die Umfangsnut 14' im Abstand a zur Flanke 13 angeordnet.

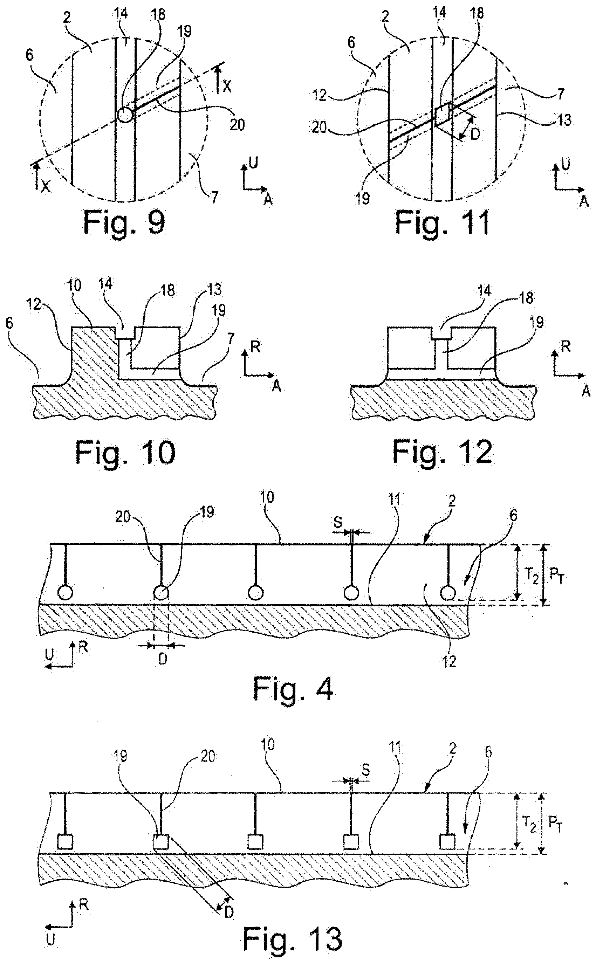

Die Figuren 9 und 10 zeigen eine alternative Ausführung zu dem in den Figuren 2 und 3 dargestellten Ausführungsbeispiel, bei welcher der Durchgangskanal 19 lediglich zwischen der Flanke 13 und dem Kanal 18 erstreckt ausgebildet ist und dort und somit mit Abstand zur Flanke 12 endet. Ein Wasserablauf erfolgt hier durch den Kanal 18 und den Kanal 19 in die Umfangsrille 7.

In alternativer nicht dargestellter Ausführungsform ist ein Kanal 19 lediglich zwischen Flanke 12 und Kanal 18 ausgebildet.

In einer weiteren alternativen, nicht dargestellten Ausführung sind über den Umfang des Fahrzeugluftreifens hinweg Kanäle 18, die lediglich mit einem zwischen Kanal 18 und Flanke 13 ausgebildeten Kanal 19 verbunden sind, und Kanäle 18, die lediglich mit einem zwischen Kanal 18 und Flanke 12 ausgebildeten Kanal 19 verbunden sind, jeweils in alternierender Reihenfolge hintereinander angeordnet.

Die Figuren 1 bis 10 zeigen jeweils Ausführungsbeispiele, bei denen die Durchgangskanäle 18 und 19 mit kreisförmigem Querschnitt ausgebildet sind.

Die Figuren 11, 12 und 13 zeigen hierzu alternative Ausführungsformen, bei denen die Kanäle 18 bzw.19 jeweils einen viereckigen Querschnitt aufweisen. Die Figuren 11 und 12 zeigen dabei ein Ausführungsbeispiel, bei welchem der Kanal 18 mit einem parallellogrammförmigen Querschnitt ausgebildet ist, wobei zwei gegenüberliegende Seiten des Parallelogramms in Umfangsrichtung U und die beiden anderen sich gegenüberliegenden Seiten des Parallelogramms in Erstreckungsrichtung des Kanals 19 ausgerichtet sind. Dabei gelten für die größte Diagonale D des Parallelogramms die oben im Zusammenhang mit der kreisförmige Ausbildung der Querschnitte für den Durchmesser D gemachten Definitionen analog.

Fig. 13 zeigt ein Ausführungsbeispiel, bei dem der Kanal 19 mit quadratischem Querschnitt ausgebildet ist, wobei hier das Maß D die Diagonale des Quadrates angibt. Wie in Figur 1 dargestellt ist, ist in analoger Weise zur Ausbildung der Umfangsrippe 2 mit Umfangsnut 14 und Kanälen 18 und 19 auch die Umfangsrippe 3 und die Umfangsrippe 4 ausgebildet. Dabei ist die Neigungsrichtung der Kanäle 19 - in Figur 1 in axialer Richtung A von links nach rechts gesehen - in der Umfangsrippe 13 gegenläufig gewählt zur Neigungsrichtung der Kanäle 19 der Umfangsrippe 2 und 4.

In der oben beschriebenen und in den Figuren dargestellten Ausführungen sind die Profilbänder 2, 3 und 4 jeweils als Umfangsrippen dargestellt. In alternativer, nicht dargestellten Ausführung sind die Profilbänder 2, 3 und 4 als Profilblockreihen bekannter Art mit in Umfangsrichtung U hintereinander angeordneten und jeweils durch Querrillen voneinander getrennten Profilblockelementen ausgebildet, wobei sich bei dieser Ausführung die Umfangsnut 14 in der radial äußeren Oberfläche 10 der Profilblockelemente über die Profilblockelemente hinweg über den gesamten Umfang des Luftreifens erstreckt. Dabei sind innerhalb der Profilblockelemente im Nutgrund jeweils in Umfangsrichtung U mehrere hintereinander angeordnete Durchgangskanäle 18 und 19 - analog zu den oben beschriebenen und/oder dargestellten Ausführungen - ausgebildet. Mehrere innerhalb eines Profilblockelementes hintereinander angeordnete Kanäle 18 sind dabei jeweils im Abstand L zueinander angeordnet.

### Bezugszeichenliste

- 1: Profilblockreihe
- 2: Umfangsrippe
- 3: Umfangsrippe
- 4: Umfangsrippe
- 5: Profilblockreihe
- 6: Umfangsrille
- 7: Umfangsrille
- 8: Umfangsrille
- 9: Umfangsrille
- 10: Radial äußere Oberfläche
- 11: Rillengrund
- 12: Flanke (Rillenwand)
- 13: Flanke (Rillenwand)
- 14: Umfangsnut
- 15: Nutgrund
- 16: Nutwand
- 17: Nutwand
- 18: Kanal
- 19: Kanal
- 20: Feineinschnitt

## Patentansprüche

1. Laufstreifenprofil eines Fahrzeugluftreifens mit in axialer Richtung A des Fahrzeugluftreifens nebeneinander angeordneten Umfangsrillen (6,7,8,9) und mit jeweils einem axial zwischen zwei benachbarten Umfangsrillen (6,7) der in radialer Richtung gemessenen Profiltiefe P_{T} angeordneten, über den Umfang des Reifens erstreckten Profilband (2) der Breite B, welches in radialer Richtung nach außen hin durch eine radial äußere, die Bodenkontaktfläche bildende Oberfläche (10) begrenzt ist, wobei das Profilband (2) in axialer Richtung A zu beiden Seiten hin jeweils durch eine Flanke (12,13) begrenzt wird, die jeweils die zum Profilband weisende Rillenwand der begrenzenden Umfangsrille (6,7) bildet,
**dadurch gekennzeichnet,**
**dass** in der radial äußeren Oberfläche (10) **eines zwischen zwei benachbarten Umfangsrillen (6,7) angeordneten Profilbandes (2)** mit Abstand a > 0mm zu beiden das Profilband (2) begrenzenden Umfangsrillen (6,7) im Profilband (2) eine in Umfangsrichtung U des Reifens orientierte Umfangsnut (14) der in der radial äußeren Oberfläche (10) gemessenen maximalen Breite b mit b < (B/2) ausgebildet ist, welche in radialer Richtung R nach innen durch einen Nutgrund (15) begrenzt und mit einer in radialer Richtung R gemessenen Tiefe t mit 0,5mm ≤t≤(1/3)P_{T} ausgebildet ist, und **dass** über den Umfang des Reifens verteilt im Profilband (2) rohrförmige Durchgangskanäle (18,19) ausgebildet sind, die sich jeweils ausgehend vom Nutgrund (15) bis in die eine Rillenwand der angrenzenden Umfangsrille (6,7) bildende Flanke radial (12,13) innerhalb der radial äußeren Oberfläche (10) erstrecken und die Nut (14) und die Umfangsrille (6,7) miteinander verbinden.

2. Laufstreifenprofil gemäß den Merkmalen von Anspruch 1, wobei die Tiefe t der Nut (14) mit t ≤ 3mm ausgebildet ist.

3. Laufstreifenprofil gemäß den Merkmalen von Anspruch 1oder 2, wobei die Breite b der Nut (14) mit b ≤ (B/5) ausgebildet ist.

4. Laufstreifenprofil gemäß den Merkmalen von einem der vorangegangenen Ansprüche,
wobei die Breite b der Nut (14) mit 2mm≤b≤5mm ausgebildet ist.

5. Laufstreifenprofil gemäß den Merkmalen von einem der vorangegangenen Ansprüche,
wobei die Breite B des Profilbandes (2) mit 20mm≤B≤60mm - insbesondere mit 20mm≤B≤40mm - ausgebildet ist.

6. Laufstreifenprofil gemäß den Merkmalen von einem der vorangegangenen Ansprüche,
wobei der Abstand a mit a ≥10mm ausgebildet ist.

7. Laufstreifenprofil gemäß den Merkmalen von einem der vorangegangenen Ansprüche,
wobei der rohrförmige Durchgangskanal (18,19) sich in - insbesondere in einem ersten Erstreckungsabschnitt (19) - ausgehend von der Flanke in axialer Richtung A unter Einschluss eines Neigungswinkels α zur axialen Richtung A mit 0°≤α≤45° durch das Profilband (2) hindurch bis zur axialen Position des Nutgrundes (14) erstreckt.

8. Laufstreifenprofil gemäß den Merkmalen von Anspruch 7,
wobei der rohrförmige Durchgangskanal (18,19) in einem zweiten Erstreckungsabschnitt (18) ausgehend vom ersten Erstreckungsabschnitt (19) in der axialen Posititon der Nut (14) im Wesentlichen in radialer Richtung R nach außen hin bis zum Nutgrund (14) erstreckt ausgebildet ist.

9. Laufstreifenprofil gemäß den Merkmalen von einem der vorangegangenen Ansprüche,
wobei der rohrförmige Durchgangskanal (19) mit seinem tiefsten Punkt in einer von der radial äußeren Oberfläche gemessenen Tiefe T₂ in der Flanke (12,13) ausgebildet ist.

10. Laufstreifenprofil gemäß den Merkmalen von einem der vorangegangenen Ansprüche,
wobei der rohrförmige Durchgangskanal (19) mit seinem tiefsten Punkt in einer von der radial äußeren Oberfläche gemessenen Tiefe T₂ in der Flanke (12,13) ausgebildet ist mit (0,6 P_{T})≤ T₂≤ P_{T}.

11. Laufstreifenprofil gemäß den Merkmalen von einem der vorangegangenen Ansprüche,
wobei der rohrförmige Durchgangskanal (19)- insbesondere bei einem PKW-Reifen -mit seinem tiefsten Punkt in einer von der radial äußeren Oberfläche (10) gemessenen Tiefe T₂ in der Flanke (12,13) ausgebildet ist mit (P_{T} - 3mm)≤T₂≤ P_{T}.

12. Laufstreifenprofil gemäß den Merkmalen von einem der vorangegangenen Ansprüche,
wobei zwei in Umfangsrichtung U innerhalb eines als Profilrippe (2) ausgebildeten Profilbandes oder innerhalb eines Profilblockes bei einem als Profilblockreihe ausgebildeten Profilbandes hintereinander angeordneten Durchgangskanäle (18) im Nutgrund (14) jeweils im Abstand L mit 20mm ≤L≤ 40mm hintereinander angeordnet sind.

## Claims

1. Tread profile of a pneumatic vehicle tyre with circumferential grooves (6, 7, 8, 9) arranged alongside one another in the axial direction A of the pneumatic vehicle tyre and with in each case a profile strip (2) of the width B made to extend over the circumference of the tyre and arranged axially between two adjacent circumferential grooves (6, 7) of the profile depth P_{T} measured in the radial direction, the profile strip (2) being delimited on both sides in the axial direction A by a flank (12, 13), which respectively forms the groove wall of the adjacent circumferential groove (6, 7) that is facing the profile strip,
**characterized**
**in that** a circumferential channel (14), which is oriented in the circumferential direction U of the tyre and is of the maximum width b measured in the radially outer surface (10), with b < (B/2), and which in the radial direction R is inwardly delimited by a channel base (15) and is formed with a depth t measured in the radial direction R, with 0.5 mm ≤ t ≤ (1/3)P_{T}, is formed in the profile strip (2) at a distance a > 0 mm from both of the circumferential grooves (6, 7) delimiting the profile strip (2), and in that tubular passages (18, 19), which extend within the radially outer surface (10) in each case from the channel base (15) into the flank forming a groove wall of the adjacent circumferential groove (6, 7), are formed in the profile strip (2), distributed over the circumference of the tyre.

2. Tread profile according to the features of Claim 1, wherein the depth t of the channel (14) is formed with t ≤ 3 mm.

3. Tread profile according to the features of Claim 1 or 2,
wherein the width b of the channel (14) is formed with b ≤ (B/5).

4. Tread profile according to the features of one of the preceding claims,
wherein the width b of the channel (14) is formed with 2 mm ≤ b ≤ 5 mm.

5. Tread profile according to the features of one of the preceding claims,
wherein the width B of the profile strip (2) is formed with 20 mm ≤ B ≤ 60 mm - in particular with 20 mm ≤ B ≤ 40 mm.

6. Tread profile according to the features of one of the preceding claims,
wherein the distance a is formed with a ≥ 10 mm.

7. Tread profile according to the features of one of the preceding claims,
wherein the tubular passage (18, 19) extends - in particular in a first portion of extent (19) - from the flank in the axial direction A through the profile strip (2) as far as the axial position of the channel base (14) while forming an angle of inclination α in relation to the axial direction A, with 0° ≤ α ≤ 45°.

8. Tread profile according to the features of Claim 7, wherein the tubular passage (18, 19) is formed so as to extend in a second portion of extent (18) from the first portion of extent (19) in the axial position of the channel (14) substantially in a radial direction R outwards as far as the channel base (14).

9. Tread profile according to the features of one of the preceding claims,
wherein the tubular passage (19) is formed with its deepest point in the flank (12, 13) at a depth T₂ measured from the radially outer surface.

10. Tread profile according to the features of one of the preceding claims,
wherein the tubular passage (19) is formed with its deepest point in the flank (12, 13) at a depth T₂ measured from the radially outer surface, with (0.6 P_{T}) ≤ T₂ ≤ P_{T}.

11. Tread profile according to the features of one of the preceding claims,
wherein the tubular passage (19) - in particular in the case of a car tyre - is formed with its deepest point in the flank (12, 13) at a depth T₂ measured the radially outer surface (10), with (P_{T}-3 mm) ≤ T₂ ≤ P_{T}.

12. Tread profile according to the features of one of the preceding claims,
wherein two passages (18), arranged one behind the other in the circumferential direction U within a profile strip formed as a profile rib (2) or within a profile block in the case of a profile strip formed as a row of profile blocks, are arranged one behind the other in the channel base (14) respectively at a distance L, with 20 mm ≤ L ≤ 40 mm.

## Revendications

1. Profilé de bande de roulement d'un pneumatique de véhicule, comprenant des rainures circonférentielles (6, 7, 8, 9), disposées les unes à côté des autres dans la direction axiale A du pneumatique de véhicule, et des bandes profilées (2) de largeur B qui sont chacune disposées axialement entre deux rainures circonférentielles (6, 7) adjacentes de la profondeur profilée P_{T} mesurée dans la direction radiale, qui s'étendent sur la circonférence du pneumatique et qui sont chacune délimitées, dans la direction radiale vers l'extérieur, par une surface radialement extérieure formant la surface de contact au sol (10), les bandes profilées (2) sont chacune délimitées dans la direction axiale A vers les deux côtés par un flanc (12, 13) qui forme à chaque fois la paroi, tournée vers la bande profilée, de la rainure circonférentielle délimitée (6, 7),
**caractérisé en ce que**
une gorge circonférentielle (14), orientée dans la direction circonférentielle U du pneumatique et ayant une largeur maximale b, avec b < (B/2), mesurée dans la surface radialement extérieure (10), est formée dans la surface radialement extérieure (10) d'une bande profilée (2) disposée entre deux rainures circonférentielles (6, 7) adjacentes à une distance a > 0 mm des deux rainures circonférentielles (6, 7) dans la bande profilée (2) délimitant la bande profilée (2), laquelle gorge circonférentielle est délimitée dans la direction radiale R vers l'intérieur par un fond de gorge (15) et est conçue avec une profondeur t, avec 0,5 mm ≤ t ≤ (1/3) P_{T}, mesurée dans la direction radiale R et **en ce que** des conduits de passage tubulaires (18, 19) sont formés dans la bande profilée (2) en étant répartis sur la circonférence du pneumatique, lesquels conduits de passage s'étendent du fond de gorge (15) jusque dans le flanc (12, 13), formant une paroi de la rainure circonférentielle (6, 7) adjacente, radialement à l'intérieur de la surface radialement extérieure (10) et relient la gorge (14) et la rainure circonférentielle (6, 7) l'une à l'autre.

2. Profilé de pneumatique selon les caractéristiques de la revendication 1,
la profondeur t de la gorge (14) étant telle que t ≤ 3 mm.

3. Profilé de pneumatique selon les caractéristiques de la revendication 1 ou 2,
la largeur b de la gorge (14) est telle que b ≤ (B/5).

4. Profilé de pneumatique selon les caractéristiques de l'une des revendications précédentes,
la largeur b de la gorge (14) étant telle que 2 mm ≤ b ≤ 5 mm.

5. Profilé de pneumatique selon les caractéristiques de l'une des revendications précédentes,
la largeur B de la bande profilée (2) telle que 20 mm ≤ B ≤ 60 mm, en particulier avec 20 mm ≤ B ≤ 40 mm.

6. Profilé de pneumatique selon les caractéristiques de l'une des revendications précédentes,
la distance a étant telle que a ≥ 10 mm.

7. Profilé de pneumatique selon les caractéristiques de l'une des revendications précédentes,
le conduit de passage tubulaire (18, 19) s'étendant, en particulier dans une première partie d'extension (19), à travers la bande profilée (2) depuis le flanc dans la direction axiale A, en formant un angle d'inclinaison α par rapport à la direction axiale A, avec 0° ≤ α ≤ 45°, jusqu'à la position axiale du fond de gorge (14).

8. Profilé de pneumatique selon les caractéristiques de la revendication 7,
le conduit de passage tubulaire (18, 19) étant conçu de manière à s'étendre, dans une deuxième partie d'extension (18), depuis la première partie d'extension (19), dans la position axiale de la gorge (14), sensiblement dans une direction radiale R vers l'extérieur jusqu'au fond de gorge (14).

9. Profilé de pneumatique selon les caractéristiques de l'une des revendications précédentes,
le conduit de passage tubulaire (19) étant formé dans le flanc (12, 13), son point le plus bas étant à une profondeur T₂ mesurée depuis la surface radialement extérieure.

10. Profilé de pneumatique selon les caractéristiques de l'une des revendications précédentes,
le conduit de passage tubulaire (19) étant formé dans le flanc (12, 13), son point le plus bas étant à une profondeur T₂ mesurée depuis la surface radialement extérieure, avec (0,6 P_{T}) ≤ T₂ ≤ P_{T}.

11. Profilé de pneumatique selon les caractéristiques de l'une des revendications précédentes,
le conduit de passage tubulaire (19) étant formé, en particulier pour un pneumatique de voiture particulière, dans le flanc (12, 13), son point le plus bas étant à une profondeur T₂ mesurée depuis la surface radialement extérieure (10), avec (P_{T}-3 mm) ≤ T₂ ≤ P_{T}.

12. Profilé de pneumatique selon les caractéristiques de l'une des revendications précédentes,
deux conduits de passage (18), disposés les uns à la suite des autres dans la direction circonférentielle U à l'intérieur d'une bande profilée, réalisée sous la forme d'une nervure profilée (2), ou à l'intérieur d'un bloc profilé, dans le cas d'une bande profilée réalisée sous la forme d'une rangée de blocs profilés, étant chacun disposés l'un à la suite de l'autre dans le fond de gorge (14) à la distance L avec 20 mm ≤ L ≤ 40 mm.
